# EUROPEAN PATENT APPLICATION

(11) **EP 1 591 603 A1**
(43) Date of publication of application: **02.11.2005**
(21) Application number: 04252424.9
(22) Date of filing: 26.04.2004
(51) Int. Cl.: E04F 15/12, E04F 15/02, F24D 13/02, H05B 3/34

(54) **Method of constructing an electrically-heated floor**

(71) Applicant: THERMAL REFLECTIONS LIMITED, Grimsby DN31 2BN (GB)
(72) Inventor: Dixon, Stuart, Grimsby, DN32 0BX (GB)
(74) Representative: Loven, Keith James

(57) **Abstract**

A method of constructing an electrically-heated floor comprises preparing a sub-floor to receive a heating cable thereon, calculating the heating requirements for the room (1) of which the floor is a part, preparing a mesh substrate (2) conforming substantially to the shape of the floor to be constructed, arranging a heating cable (3) on the substrate in such a manner as to optimise the heating effect in the room, and attaching the cable to the substrate so as to maintain the desired arrangement. The substrate is then positioned on the sub-floor and electrical connections to the cable are effected, before laying a flooring surface over the substrate and cable.

## Description

### Field of the Invention

This invention relates to a method of constructing an electrically-heated floor.

### Background to the Invention

Electrically-heated floors are typically constructed by preparing a sub-floor, positioning a heating cable on the sub-floor in a pattern which ensures uniform heat distribution, effecting electrical connections to the heating cable, and then laying a flooring surface, usually a concrete screed followed by appropriate surfacing, on top of the heating cable on the sub-floor. The laying of the cable is important to the efficient functioning of the heating; the heating cable must cover the floor as evenly as possible, and this means ensuring that the loops of the cable are correctly spaced from each other to avoid the risk of local overheating through the loops of the cable being too close together, and that all corners of the room are within the area of influence of the heating cable, to avoid any cold spots. The laying of the cables is a skilled job, requiring the presence of a qualified electrician, at least to effect the electrical connections before the floor is laid, and co-ordinating the different skilled tradesmen to be available in the correct time-sequence is often very difficult, leading to delays in completion of the floor, and hence the building of which it is to be a part. Such delays substantially increase building costs.

To make the laying of the cable easier, heating cables are supplied arranged on and attached to a flexible substrate, for example in the form of a mesh in a roll. The substrate is arranged in strips on the sub-floor, after being cut in such a manner as to leave the cable intact throughout the floor. Because the substrate is supplied in a standard width and length, it is not possible to achieve uniform distribution of the cable across the whole of the floor unless the width of the room is an exact multiple of the width of the substrate. Furthermore, for rooms which are not exactly rectangular, it may not be possible to achieve coverage of the floor in a continuous cable loop, necessitating intermediate electrical connections to be made. This is undesirable for two reasons: firstly, an electrician is required to be present during and after the cable-laying operation; and secondly, such connections become sealed into the floor structure, and if there is any fault in a connection, it cannot readily be accessed once the floor is complete. Another disadvantage of the use of standard substrate-supported cable laying is that the spacing of the cable is fixed, and is therefore designed to suit an average room construction and heating requirements; if the actual heating requirements of the room are not standard and average, the system will be unsatisfactory.

### Summary of the Invention

Accordingly, the invention provides a method of constructing an electrically-heated floor, comprising:
calculating the heating requirements for the room of which the floor is a part;
preparing a sub-floor to receive a heating cable thereon;
preparing a mesh substrate conforming substantially to the shape of the floor to be constructed;
arranging a heating cable on the substrate in such a manner as to optimise the heating effect in the room, and attaching the cable to the substrate so as to maintain the desired arrangement;
positioning the substrate on the sub-floor;
effecting electrical connections to the cable; and
laying a flooring surface over the substrate and cable.

Preferably, the substrate is a mesh, for example a plastics mesh. A particularly suitable form of mesh is that formed by slitting and stretching a flexible plastics sheet material. The heating cable may be attached to the substrate by any convenient means, for example plastics or wire-and-plastics ties set at intervals along the cable. The use of a flexible substrate such as a mesh permits the substrate to be prepared, and the cable attached, in a separate location, and then to be rolled up for transportation to the building site where the floor is to be constructed. The substrate and attached cable can then simply be unrolled on to the prepared sub-floor, and the ends of the cable attached to a power supply controller, so that the floor is ready for laying of the flooring surface.

While the flooring surface will typically include a concrete screed, for which the presence of openings in a mesh substrate will be important to permit bonding of the screed to the sub-floor, it will be understood that the invention is not limited to such flooring. For example, ceramic or other tiles may be laid directly on to the substrate with the use of suitable bonding materials to attach the tiles through the mesh substrate to the sub-floor. Alternatively, other types of flooring may be laid over the substrate and heating cable, with or without bonding.

The method of the invention permits the correct arrangement of the heating cable to be achieved away from the building site in controlled conditions using specialist labour. Thus, as soon as the sub-floor is ready, the substrate and attached heating cable can be delivered and positioned by relatively unskilled labour, ready for the electrician to make the electrical connections prior to laying of the flooring. This substantially reduces delays and thus saves significantly in building costs.

### Brief Description of the Drawings

In the drawings, which illustrate a method according to an exemplary embodiment of the invention:
Figure 1 is a plan view of the room showing the substrate and heating cable installed, ready for the flooring to be laid; and
Figure 2 is a sectional view, on an enlarged scale, of a portion of the substrate with the heating cable attached.

### Detailed Description of the Invention

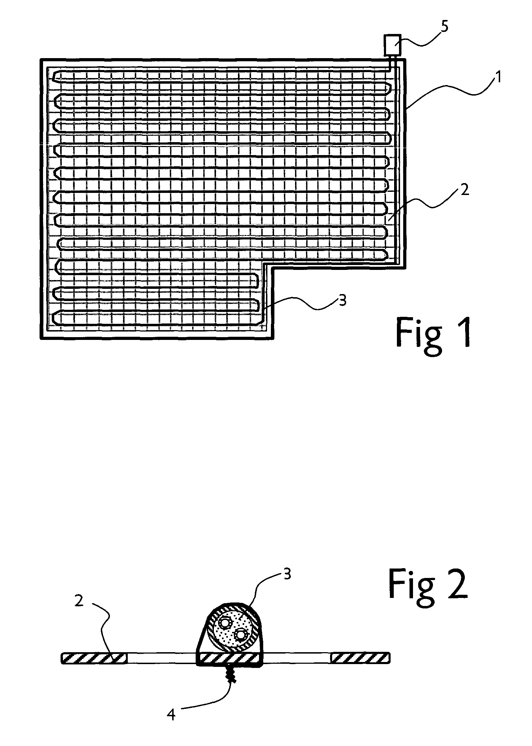

Referring to the drawings, a room 1 of a building in construction is provided with a sub-floor, for example of concrete having the required level of thermal insulation incorporated therein. Using the design thermal characteristics of the room - design temperature, thermal insulation coefficients, door and window areas and types, adjacent rooms, ceiling type, for example - the type and layout of the heating cable is then determined. Conventional techniques are available for the design of electric underfloor heating systems. A plastics mesh substrate 2 is then prepared in the shape of the room, either in the form of a single piece cut from a suitably wide web of the material, or by joining together a number of separate pieces cut from a narrower web. The heating cable 3 is laid on to the substrate in the desired arrangement and attached to it using cable ties 4 (Figure 2).

The substrate and attached heating cable can then be rolled for transport to the room, where it is unrolled and laid out, the ends of the heating cable 3 then being connected to the electrical supply 5 in conventional manner. A concrete screed may then be applied over the substrate and cable, and when this is cured the final flooring surface, for example ceramic tiles, can be affixed to the screeded surface.

## Claims

1. A method of constructing an electrically-heated floor, comprising:
calculating the heating requirements for the room of which the floor is a part;
preparing a sub-floor to receive a heating cable thereon;
preparing a mesh substrate conforming substantially to the shape of the floor to be constructed;
arranging a heating cable on the substrate in such a manner as to optimise the heating effect in the room, and attaching the cable to the substrate so as to maintain the desired arrangement;
positioning the substrate on the sub-floor;
effecting electrical connections to the cable; and
laying a flooring surface over the substrate and cable.

2. A method according to claim 1, wherein the substrate is a mesh.

3. A method according to Claim 2, comprising attaching the heating cable to the mesh substrate using cable ties.

4. A method according to Claim 2 or 3, comprising covering the substrate and cable with a concrete screed.
